# EUROPÄISCHE PATENTSCHRIFT

(11) **EP 2 753 531 B1**
(45) Veröffentlichungstag und Bekanntmachung des Hinweises auf die Patenterteilung: **02.03.2016**
(21) Anmeldenummer: 12748020.0
(22) Anmeldetag: 13.08.2012
(51) Int. Cl.: B62D 5/09, B62D 5/32

(54) **HYDRAULISCHE LENKEINRICHTUNG**
HYDRAULIC STEERING DEVICE
SYSTÈME DE DIRECTION HYDRAULIQUE

(30) Priorität: 06.09.2011 DE 102011112625
(43) Veröffentlichungstag der Anmeldung: 16.07.2014
(73) Patentinhaber: Hydraulik Nord Fluidtechnik GmbH & Co. KG, 19370 Parchim (DE)
(72) Erfinder: BERGMANN, Erhard, 19079 Mirow (DE); BRUMMUND, Stephan, 75217 Birkenfeld (DE); MUELLER, Michael, 18195 Zarnewanz (DE); DE LA MOTTE, Markus, 19417 Klein Labenz (DE); VOSS, Gerhard, 19370 Parchim (DE); SCHMITZ, David, 97816 Lohr (DE)
(74) Vertreter: Gulde & Partner
(86) Internationale Anmeldenummer: PCT/EP2012/065794
(87) Internationale Veröffentlichungsnummer: WO 2013/034397

(56) Entgegenhaltungen:
- EP-A1- 1 295 778
- WO-A1-2008/017290
- DE-B3-102009 013 633

## Beschreibung

Die Erfindung betrifft eine hydraulische Lenkeinrichtung mit den im Oberbegriff des Anspruchs 1 genannten Merkmalen.

Hydraulische Lenkeinrichtungen der gattungsgemäßen Art sind bekannt. Diese werden üblicherweise in mobilen hydraulischen Anlagen, insbesondere in langsam fahrenden Fahrzeugen, eingesetzt.

Hydraulische Lenkeinrichtungen der gattungsgemäßen Art umfassen bekanntermaßen einen Lenkzylinder, der mit lenkbaren Rädern des Fahrzeuges verbunden ist, eine Versorgungsanlage, die zum Aufbau eines hydraulischen Kreises eine Versorgungspumpe und einen Tank aufweist, sowie ein zwischen Lenkzylinder und Versorgungsanlage geschaltetes als Drehschiebersteuerventil ausgebildetes Lenkventil. Das Drehschiebersteuerventil wird von einer äußeren, in einem Gehäuse eingepassten Steuerhülse und einem inneren, zentrisch angeordneten Steuerkolben gebildet. Der Steuerkolben ist einerseits über ein Zahnnabenprofil mit einem handbetätigbaren Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad einer Dosierpumpe verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und der Dosierpumpe besteht über Kommutatorbohrungen eine hydraulische Verbindung. Diese hydraulische Lenkeinrichtung besitzt Anschlüsse für einen Zulauf und einen Rücklauf zu der Versorgungsanlage und Anschlüsse für zu den Lenkzylinder führenden Leitungen, für eine Rechtslenkung bzw. eine Linkslenkung.

Diese Lenkeinrichtung arbeitet mit der Unterstützung der Versorgungspumpe im Servobetrieb und bei Ausfall der Versorgungspumpe im Notbetrieb, bei dem der erforderliche Druck in der Lenkeinrichtung allein durch die Handkraft am Lenkrad erzeug wird. Um das Fördervolumen der hydraulischen Lenkung in einem derartigen Fall zu vergrößern ist bekannt, eine hydraulische Lenkeinrichtung mit einer so genannten Stromverstärkung auszustatten. So ist beispielsweise aus DE 103 01 752 A1 eine hydraulische Lenkeinrichtung mit Stromverstärkung bekannt, die in bekannter Weise eine, über das Lenkventil führende Hauptstromleitung und eine das Lenkventil umgehende Nebenstromleitung ausbildet. In der Nebenstromleitung ist ein vom Hauptstrom gesteuertes Stromregelventil angeordnet. Zur Steuerung dieses Stromregelventils befindet sich an der Lenkeinrichtung ein Messwertaufnehmer zur Erfassung eines vom Hauptstrom abhängigen Messsignals. Das Messsignal wird einem Steuergerät zur Aufnahme, Verarbeitung und Weitergabe des Messsignals an das Stromregelventil in der Nebenstromleitung zugeführt.

Das Stromregelventil ist als Dreistellungs-Stromregelventil ausgebildet, wobei in einer Schaltstellung des Stromregelventils der Lenkzylinder für eine Linkslenkung oder eine Rechtslenkung ansteuerbar ist. In einer neutralen Stellung ist die Nebenstromleitung gesperrt. Die Ansteuerung des Stromregelventils erfolgt über das Steuergerät, so dass sich eine Lenkung nach dem so genannten Steer-By-Wire-Prinzip ergibt.

Aus WO 2008/017290 A1 und DE 10 2009 013 633 B3 sind hydraulische Lenkeinrichtungen mit Stromverstärkung bekannt. Es ist eine Stromregelventilanordnung vorgesehen, die der Ausbildung einer, die Hauptstromverbindung umgehende Nebenstromverbindung ermöglicht.

Der Erfindung liegt die Aufgabe zugrunde, eine hydraulische Lenkeinrichtung der gattungsgemäßen Art zu schaffen, die die Funktionalität eines Steer-By-Wire-Systems aufweist und eine hohe funktionale Sicherheit des elektrohydraulischen Lenksystems aufweist, so dass mit dem erfindungsgemäßen elektrohydraulischen Lenksystem ausgestattete Fahrzeuge auch on road, dass heißt mit Straßenzulassung, eingesetzt werden können.

Erfindungsgemäß wird diese Aufgabe durch eine hydraulische Lenkeinrichtung mit den in Anspruch 1 genannten Merkmalen gelöst. Dadurch, dass die in der Nebenstromverbindung angeordnete Stromregelventilanordnung einzeln ansteuerbare Ventilgruppen umfasst, die jeweils in den Vorlauf beziehungsweise Rücklauf der Nebenstromverbindung geschaltet sind, wobei die Stromregelventilanordnung vier Ventile umfasst, von denen ein Ventil in den Vorlauf Rechtslenkung, ein Ventil in den Rücklauf Rechtslenkung, ein Ventil in den Vorlauf Linkslenkung und ein Ventil in den Rücklauf Linkslenkung geschaltet ist, ist vorteilhaft möglich, eventuelle Fehler in der Nebenstromverbindung mittels einer Plausibilitätsprüfung der Ansteuersignale der Ventile und einem Ausgangssignal, insbesondere einem Ansprechen des Lenkzylinders, zu entdecken und zu eliminieren. Hierdurch wird ein fehlertolerantes elektrohydraulisches Lenksystem zur Verfügung gestellt, das einerseits nach dem Steer-by-Wire-Prinzip arbeitet und gleichzeitig on road eingesetzt werden kann.

Ferner wird vorteilhaft durch die Einzelventilanordnung innerhalb der Stromregelventilanordnung möglich, ohne weitere Zusatzventile einen Druck in der Rücklaufleitung zu der Versorgungsanlage zu regeln. Hierdurch wird vorteilhaft möglich, beispielsweise den Lenkzylinder einzuspannen, das heißt, sowohl die für die Rechtslenkung als auch für die Linkslenkung des Lenkzylinders zuständige Kammer kann mit Druck beaufschlagt werden.

Hierdurch wird auch vorteilhaft möglich durch einzelne Ansteuerung jedes der vier Ventile die an den Ventilen anliegenden Steuersignale auf Plausibilität zu überprüfen und falls erforderlich, eine Korrektur einer fehlerhaften Bewegung des Lenkzylinders durch ein Korrektursignal zu einem der anderen Ventile zu bewirken. Hierdurch wird eine fehlerhafte Bewegung des Lenkzylinders automatisch korrigiert und muss nicht vom Fahrer vorgenommen werden wie bei bisher bekannten Lösungen.

In weiterer bevorzugter Ausgestaltung der Erfindung ist vorgesehen, dass den Ventilen ein gemeinsames Freigabe-Abschaltventil vorgeschaltet ist. Hierdurch wird vorteilhaft möglich, durch Ansteuerung des gemeinsamen Freigabe-Abschaltventiles die Nebenstromverbindung aktiv oder passiv zu schalten. Bei einer fehlerhaften Ansteuerung des Stromregelventils wird der Nebenstrom immer abgeschaltet.

In bevorzugter Ausgestaltung der Erfindung ist vorgesehen, dass das Freigabe-Abschaltventil von einem zusätzlichen Bediengerät ansteuerbar ist. Hierdurch wird vorteilhaft möglich, dass das Fahrzeug, insbesondere über ein Joy-Stick-Bediengerät oder eine GPS (Global Positionierung System)-Ansteuerung lenkbar ist.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die ein Blockschaltbild der erfindungsgemäßen hydraulischen Lenkeinrichtung zeigt, näher erläutert.

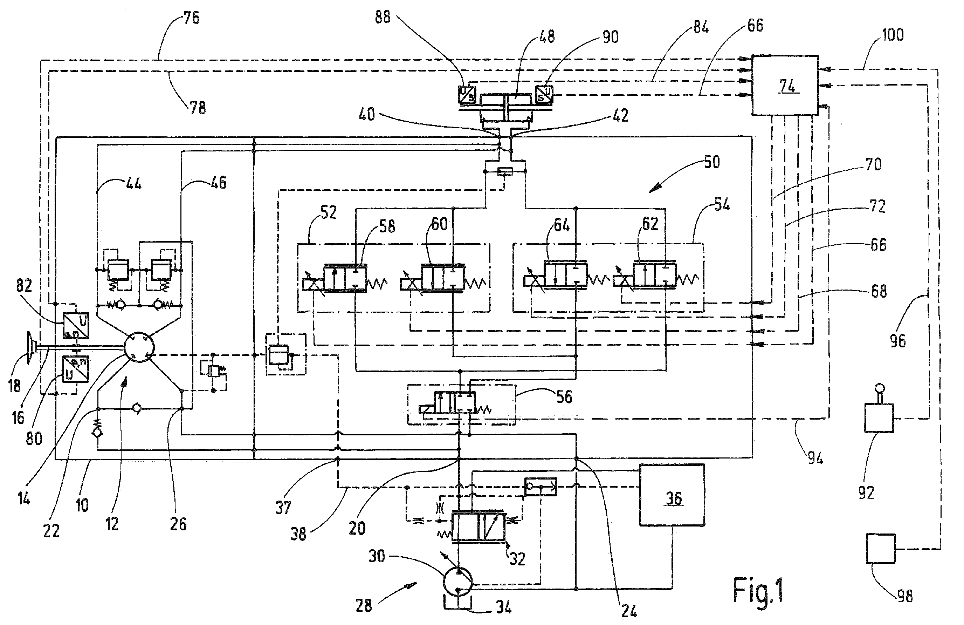

Das in Figur 1 dargestellte Blockschaltbild zeigt einen Lenkkreislauf für ein im Einzelnen nicht dargestelltes langsam fahrendes Fahrzeug, beispielsweise einen Traktor oder eine Landmaschine.

Der Lenkkreislauf umfasst eine Lenkeinrichtung 10, die ein Lenkventil 12 aufweist. Das Lenkventil 12 besitzt eine drehschiebergesteuerte Dosierpumpe 14, die über ein Lenkgestänge 16 mit einem Handlenkrad 18 verbunden ist.

Die Lenkeinrichtung 10 besitzt einen Zulaufanschluss 20, der mit einem ersten Eingang 22 des Lenkventils 12 verbunden ist. Die Lenkeinrichtung 10 weist ferner einen Rücklaufanschluss 24 auf, der mit dem Ablauf 26 des Lenkventiles 12 verbunden ist.

An den Zulaufanschluss 20 beziehungsweise Rücklaufanschluss 24 ist eine insgesamt mit 28 bezeichnete Versorgungsanlage angeschlossen. Die Versorgungsanlage 28 umfasst eine Versorgungspumpe 30, die über ein Stromteilventil 32 mit dem Zulaufanschluss 20 verbunden ist. Ferner ist ein Tank 34 vorgesehen, der mit dem Rücklaufanschluss 24 verbunden ist.

Das Stromteilventil 32 bildet ein so genanntes Prioritätsventil, mittels dem ein Versorgungsbetrieb der Versorgungspumpe 30 zwischen einer Arbeitshydraulik 36 und der Lenkeinrichtung 10 gesteuert werden kann. Über einen Lastanschluss 37 und eine Steuerleitung 38 erhält das Stromteilventil 32 bei Anforderung durch die hydraulische Lenkeinrichtung 10 ein Signal, das der hydraulischen Lenkeinrichtung 10 Priorität vor der Arbeitshydraulik 36 zuordnet.

Die Lenkeinrichtung 10 weist ferner Zylinderanschlüsse 40 und 42 auf. Der Zylinderanschluss 40 ist über eine Leitung 44 und der Zylinderanschluss 42 über eine Leitung 46 mit dem Lenkventil 12 verbunden. An die Zylinderanschlüsse 40 und 42 ist ein Lenkzylinder 48 angeschlossen, der in nicht dargestellter Weise mit lenkbaren Rädern des Fahrzeuges verbunden ist. Der Anschluss 40 ist mit einer für die Lenkrichtung Links und der Anschluss 42 mit einer für die Lenkrichtung Rechts zuständigen Kammer des Lenkzylinders 48 verbunden.

Somit bildet sich von der Versorgungspumpe 30 über das Stromteilventil 32, das Lenkventil 12 zum Lenkzylinder 48 und vom Lenkzylinder 48 zurück über das Lenkventil 12 und den Tank 34 eine Hauptstromverbindung aus.

Die Lenkeinrichtung 10 umfasst ferner eine Stromregelventilanordnung 50. Die Stromregelventilanordnung 50 besitzt eine erste Ventilgruppe 52 und eine zweite Ventilgruppe 54 sowie ein Freigabe-Abschaltventil 56. Die Ventilgruppe 52 umfasst ein Zulaufventil 58 und ein Rücklaufventil 60. Die Ventilgruppe 54 umfasst ein Zulaufventil 62 und ein Rücklaufventil 64. Die Ventile 58, 60, 62 und 64 sind jeweils als Proportionalventile ausgebildet. Bei unbetätigtem Magneten wird der Steuerkolben durch die Druckfeder in der Ausgangsstellung gehalten und sperrt den Volumenstrom. Durch die Erregung des Magneten wird der Steuerkolben direkt - proportional dem elektrischen Eingangssignal - verstellt. Die Ventile 58 und 60 sind mit dem Zylinderanschluss 40 und die Ventile 62 und 64 mit dem Zylinderanschluss 42 verbunden. Die Ventile 58 und 62 sind über das Freigabe-Abschaltventil 56 mit dem Zulaufanschluss 20 und die Ventile 60 und 64 über das Freigabe-Abschaltventil 56 mit dem Rücklaufanschluss 24 verbunden beziehungsweise verbindbar.

Somit bildet sich von der Versorgungspumpe 30 über die Stromregelventilanordnung 50 zum Lenkzylinder 48 und vom Lenkzylinder 48 zurück über die Stromregelventilanordnung 50 und den Tank 34 eine Nebenstromverbindung aus.

Der Lenkzylinder 48 ist also über das Lenkventil 12 mit der Versorgungsanlage 28 über eine Hauptstromverbindung und über die Stromregelventilanordnung 50 über eine die Hauptstromverbindung umgehende Nebenstromverbindung hydraulisch wirkverbunden.

Die Ventile 58, 60, 62 und 64 sind als Proportionalventile ausgebildet. Zur Ansteuerung sind die Ventile 58, 60, 62 und 64 über Steuerleitungen 66, 68, 70 beziehungsweise 72 mit einem Steuergerät 74 verbunden.

Das Steuergerät 74 ist ferner über Steuerleitungen 76 und 78 mit Messwertaufnehmern 80 beziehungsweise 82 verbunden. Die Messwertaufnehmer 80 und 82 sind beispielsweise Drehwinkelsensoren, die am Lenkgestänge 16 des Handlenkrades 18 angeordnet sind und die als Messgröße den eingeschlagenen Drehwinkel und die entsprechende Drehgeschwindigkeit sowie die Drehrichtung des Handlenkrades 18 ermitteln.

Das Steuergerät 74 ist ferner über Steuerleitungen 84 und 86 mit Messwertaufnehmer 88 und 90 verbunden. Die Messwertaufnehmer 88 und 90 sind Wegsensoren, die als Messgröße den zurückgelegten Weg des Lenkzylinders 48 und somit einen Lenkausschlag der Räder ermitteln. Es wird somit eine Ist-Stellung des Lenkzylinders 48 erfasst.

Die in Figur 1 dargestellte Lenkeinrichtung 10 zeigt folgende Funktion:
Im Servolenkbetrieb führt die Betätigung des Handlenkrades 18 innerhalb des Lenkventils 12 der Lenkeinrichtung 10 zur Auslenkung eines zur Dosierpumpe 14 gehörenden Drehschiebersteuerventils und damit zum Öffnen entsprechender verstellbarer Drosseln. Das von der Versorgungspumpe 30 gelieferte Hydrauliköl gelangt dabei über den Zulaufanschluss 20 zur Dosierpumpe 14, wo es als Hauptölstrom dosiert und in dieser abgemessenen Menge über die Zylinderleitungen 44 beziehungsweise 46 zum Lenkzylinder 48 befördert wird.

Gleichzeitig wird über die Messwertaufnehmer 80 beziehungsweise 82 ein entsprechender Messwert für die Zustandsveränderung des Lenkventiles 12, bewirkt durch die Drehung des Handlenkrades 18, ermittelt und dem Steuergerät 74 zur Verfügung gestellt.
Des Weiteren wird über das Steuergerät das Freigabe-Abschaltventil 56 von seiner dargestellten Sperrstellung in Durchlassstellung geschaltet. Das heißt, der Zulaufanschluss 20 wird mit den Ventilen 58 und 62 und der Rücklaufanschluss 24 mit den Ventilen 60 und 64 verbunden.

Das Steuergerät 74 bewertet die von den Messwertaufnehmern 82 beziehungsweise 80 gelieferten Signale und stellt entsprechende Ansteuersignale über die Steuerleitungen 66, 68, 70 beziehungsweise 72 für die Ventile 58, 60, 62 beziehungsweise 64 bereit.

Je nach dem, ob über das Lenkventil 12, also über das Handlenkrad 18, ein Linkslenkvorgang oder ein Rechtslenkvorgang erfolgt, wird über das Steuergerät 74 entweder das Ventil 58 und das Ventil 64 bei Linkslenkung oder das Ventil 60 und das Ventil 62 bei Rechtslenkung angesteuert. Hierdurch stellt sich ein definierter Öffnungsquerschnitt ein, der einen zum Hauptölstrom proportionalen Nebenölstrom liefert. Hierdurch gelangt von der Versorgungspumpe 30 ein Hauptölstrom über das Lenkventil 12 und ein Nebenölstrom über die Stromregelventilanordnung 50 als ein verstärkter Lenkölstrom zum Lenkzylinder 48, wodurch die mit dem Lenkzylinder 48 wirkverbundenen Räder des Fahrzeuges einschlagen. Der Einschlag der Räder erfolgt hierbei in einer linearen Abhängigkeit von der Drehzahl der Lenkbetätigung am Handlenkrad 18.

Durch das Bereitstellen von insgesamt vier Steuersignalen für die Ventile 58, 60, 62 beziehungsweise 64 und den Signalen von den Messwertaufnehmern 80, 82, 88 und 90 können die einzelnen Steuersignale untereinander und mit den Signalen der Messwertaufnehmer im Steuergerät 74 auf Plausibilität überprüft werden. Je nach Linkslenkung oder Rechtslenkung durch das Handlenkrad 18 ergibt sich eine gewünschte Stromverstärkung, die über von den Messaufnehmern 80 beziehungsweise 82 gelieferten Signalen durch das Steuergerät 74 ermittelt wird. Diese somit elektrisch überlagerte hydraulische Lenkung (Steer-by-Wire-Prinzip) muss sicherstellen, dass über den Nebenölstrom keine dem Hauptölstrom widersprechende oder nicht entsprechende Beaufschlagung des Lenkzylinders 48 erfolgt. Die funktionale Sicherheit des elektrohydraulischen Lenksystems wird somit verbessert. Insbesondere kann über das Steuergerät 74 das von den Messwertaufnehmern 82 beziehungsweise 80 gelieferte Eingangssignal mit dem von den Messwertaufnehmern 88 und 90 gelieferte Ausgangssignal verifiziert werden und bei vorhandener Unplausibilität über eine Ansteuerung der Ventile 58, 60, 62 und 64 korrigiert werden. Die Stromregelventilanordnung 50 wird bei Unplausibilität vorzugsweise über das Freigabe-Abschaltventil 56 abgeschaltet. Hierzu ist das Freigabe-Abschaltventil 56 über eine Steuerleitung 94 mit dem Steuergerät 74 verbunden. Die Korrektur, der während der Abschaltzeit möglichen fehlerhaften Lenkbewegung des Lenkzylinders 48, muss nicht wie bei bisher bekannten Lösungen vom Fahrer durchgeführt werden, sondern wird erfindungsgemäß automatisch vollzogen.

Figur 1 zeigt ferner die Möglichkeit der Ansteuerung des Lenkzylinders 48 anstelle über das Handlenkrad 18 mittels eines Bediengerätes 92, insbesondere einer so genannten Joy-Stick-Lenkung. Dieses ist über eine Steuerleitung 96 mit dem Steuergerät 74 verbunden.

Durch Betätigung des Bediengerätes 92 durch einen Fahrzeugführer kann die Lenkung entweder automatisch oder bedienergeführt erfolgen, ohne dass das Handlenkrad 18 betätigt werden muss. Über die Steuerleitung 94 wird das Freigabe-Abschaltventil 56 in seine Durchlassstellung geschaltet und gleichzeitig wird über die Steuerleitung 96 das Steuergerät 74 über die Lenkanforderungen informiert. Das Steuergerät 74 stellt die entsprechenden Steuersignale für die Ventile 58, 60, 62 beziehungsweise 64 bereit, die durch entsprechendes Öffnen einen Lenkölstrom von der Versorgungspumpe 30 über die Stromregelventilanordnung 50 zum Lenkzylinder 48 bereitstellt. Auch hier kann wieder über das über die Steuerleitung 96 gelieferte Eingangssignal und die von den Messwertaufnehmern 88 und 90 gelieferten Ausgangsignale eine Plausibilitätsprüfung erfolgen und eventuelle Fehler durch entsprechende korrigierte Ansteuersignale für die Ventile 58, 60, 62 und/oder 64 eliminiert werden.

Durch die Möglichkeit der Einzelansteuerung der Ventile 58, 60, 62 und 64 lässt sich über das Steuergerät 74 auch der Druck am Lenkzylinder 48 derart einstellen, dass dieser in einer definierten Position eingespannt wird. Hier wird schließlich in einfacher Weise eine automatische Lenkung für das Fahrzeug realisiert.

Zusätzlich kann ein GPS-Gerät 98 vorgesehen sein, das über eine Steuerleitung 100 dem Steuergerät entsprechende Positions- und/ oder vorgebbare Routensignale zur Verfügung stellt.

### Bezugszeichenliste

- 10: Lenkeinrichtung
- 12: Lenkventil
- 14: Dosierpumpe
- 16: Lenkgestänge
- 18: Handlenkrad

- 20: Zulaufanschluss
- 22: Eingang
- 24: Rücklaufanschluss
- 26: Ablauf
- 28: Versorgungsanlage

- 30: Versorgungspumpe
- 32: Stromteilventil
- 34: Tank
- 36: Arbeitshydraulik
- 37: Lastanschluss
- 38: Steuerleitung

- 40: Zylinderanschluss
- 42: Zylinderanschluss
- 44: Leitung
- 46: Leitung
- 48: Lenkzylinder

- 50: Stromregelventilanordnung
- 52: Ventilgruppe
- 54: Ventilgruppe
- 56: Freigabe-Abschaltventil
- 58: Zulaufventil

- 60: Rücklaufventil
- 62: Zulaufventil
- 64: Rücklaufventil
- 66: Steuerleitung
- 68: Steuerleitung

- 70: Steuerleitung
- 72: Steuerleitung
- 74: Steuergerät
- 76: Steuerleitung
- 78: Steuerleitung

- 80: Messwertaufnehmer
- 82: Messwertaufnehmer
- 84: Steuerleitung
- 86: Steuerleitung
- 88: Messwertaufnehmer

- 90: Messwertaufnehmer
- 92: Bediengerät
- 94: Steuerleitung
- 96: Steuerleitung
- 98: GPS-Gerät
- 100: Steuerleitung

## Patentansprüche

1. Hydraulische Lenkeinrichtung, die einen Lenkzylinder (48) mit einer Versorgungsanlage (28) hydraulisch verbindet, wobei die Versorgungsanlage (28) mit dem Lenkzylinder (48) über ein Lenkventil (12) zur Ausbildung einer Hauptstromverbindung hydraulisch wirkverbindbar ist und die Versorgungsanlage (28) mit dem Lenkzylinder (48) über eine Stromregelventilanordnung (50) zur Ausbildung einer, die Hauptstromverbindung umgehenden Nebenstromverbindung hydraulisch wirkverbindbar ist, wobei die Stromregelventilanordnung (50) durch ein elektrisches Steuergerat (74) ansteuerbar ist,
**dadurch gekennzeichnet, dass**
die Stromregelventilanordnung (50) einzeln ansteuerbare Ventilgruppen (52, 54) umfasst, die jeweils in den Vorlauf und Rücklauf der Nebenstromverbindung geschaltet sind, wobei die Stromregelventilanordnung (50) vier Ventile (58, 60, 62, 64) umfasst, von denen ein Ventil (62) in den Vorlauf Rechtslenkung, ein Ventil (64) in den Rücklauf Linkslenkung, ein Ventil (58) in den Vorlauf Linkslenkung und ein Ventil (60) in den Rücklauf Rechtslenkung geschaltet ist.

2. Hydraulische Lenkeinrichtung nach Anspruch 1,
**dadurch gekennzeichnet, dass**
den Ventilen (58, 60, 62, 64) ein gemeinsames Freigabe-Abschaltventil (56) vorgeschaltet ist.

3. Hydraulische Lenkeinrichtung nach einem der vorhergehenden Ansprüche,
**dadurch gekennzeichnet, dass**
die Stromregelventilanordnung (50) auch als Sologerät, als reine "Steere by wire Lenkung" betreibbar ist.

4. Hydraulische Lenkeinrichtung nach einem der vorhergehenden Ansprüche,
**dadurch gekennzeichnet, dass**
das Freigabe-Abschaltventil (56) im Fehlerfall die Stromregelventilanordnung (50) abschaltet.

5. Hydraulische Lenkeinrichtung nach einem der vorgehenden Ansprüche,
**dadurch gekennzeichnet, dass**
das Steuergerat (74) zur Plausibilitätsprüfung der Ansteuersignale für die Ventile (58, 60, 62, 64) mit Messwertaufnehmern (88, 90) verbunden ist, die eine Ist-Stellung des Lenkzylinders (48) erfassen.

## Claims

1. A hydraulic steering device hydraulically connecting a steering cylinder (48) to a supply system (28), wherein the supply system (28) is operatively connectable hydraulically to the steering cylinder (48) via a steering valve (12) for the purpose of forming a main stream connection and the supply system (28) is operatively connectable hydraulically to the steering cylinder (48) via a stream control valve arrangement (50) for the purpose of forming a bypass stream connection bypassing the main stream connection, wherein the stream control valve arrangement (50) is drivable by an electric control device (74),
**characterized in that**
the stream control valve arrangement (50) comprises individually drivable valve groups (52, 54) that each are connected in the forward flow path and the return flow path of the bypass stream connection, wherein the stream control valve arrangement (50) comprises four valves (58, 60, 62, 64), one valve (62) of them being connected in the forward flow path of right-hand steering, one valve (64) of them being connected in the return flow path of left-hand steering, one valve (58) of them being connected in the forward flow path of left-hand steering, and one valve (60) of them being connected in the return flow path of right-hand steering.

2. The hydraulic steering device according to Claim 1,
**characterized in that**
a common release shut-off valve (56) is arranged upstream of the valves (58, 60, 62, 64).

3. The hydraulic steering device according to any one of the preceding claims,
**characterized in that**
the stream control valve arrangement (50) is also operatable as a solo device, as a pure steer-by-wire system.

4. The hydraulic steering device according to any one of the preceding claims,
**characterized in that**
the release shut-off valve (56) shuts the stream control valve arrangement (50) off in the event of failure.

5. The hydraulic steering device according to any one of the preceding claims,
**characterized in that**
for checking the plausibility of the driving signals for the valves (58, 60, 62, 64), the control device (74) is connected to transducers (88, 90) that detect an actual position of the steering cylinder (48).

## Revendications

1. Système de direction hydraulique qui relie de manière hydraulique un vérin de direction (48) à une installation d'alimentation (28), l'installation d'alimentation (28) pouvant être reliée de manière fonctionnelle et hydraulique au vérin de direction (48) par le biais d'une vanne de direction (12) pour former une liaison d'écoulement principale, et l'installation d'alimentation (28) pouvant être reliée de manière fonctionnelle et hydraulique au vérin de direction (48) par le biais d'un dispositif à vannes de régulation de débit (50) pour former une liaison d'écoulement secondaire contournant la liaison d'écoulement principale, le dispositif à vannes de régulation du débit (50) pouvant être piloté par un appareil de commande électrique (74) ;
**caractérisé en ce que**
le dispositif à vannes de régulation du débit (50) comprend des groupes de vannes (52, 54) pilotables individuellement, qui sont branchés respectivement dans la conduite d'arrivée et dans la conduite de retour de la liaison d'écoulement secondaire, le dispositif à vannes de régulation de débit (50) comprenant quatre vannes (58, 60, 62, 64) dont une vanne (62) est branchée dans la conduite d'arrivée direction à droite, une vanne (64) est branchée dans la conduite de retour direction à gauche, une vanne (58) est branchée dans la conduite d'arrivée direction à gauche et une vanne (60) est branchée dans la conduite de retour direction à droite.

2. Système de direction hydraulique selon la revendication 1,
**caractérisé en ce**
**qu'**une vanne de déblocage-coupure (56) commune est installée en amont des vannes (58, 60, 62, 64).

3. Système de direction hydraulique selon l'une des revendications précédentes,
**caractérisé en ce que**
le dispositif à vannes de régulation de débit (50) peut également être exploité en tant qu'appareil solo, en tant que pure « direction steer by wire ».

4. Système de direction hydraulique selon l'une des revendications précédentes,
**caractérisé en ce que**
la vanne de déblocage-coupure (56) coupe le dispositif à vannes de régulation de débit (50) en cas de défaut.

5. Système de direction hydraulique selon l'une des revendications précédentes,
**caractérisé en ce que**,
pour le contrôle de plausibilité des signaux de pilotage pour les vannes (58, 60, 62, 64), l'appareil de commande (74) est raccordé à des transducteurs (88, 90) qui détectent une position effective du vérin de direction (48).
